# Europäisches Patentamt
# European Patent Office
# Office européen des brevets

(19)

(11) Veröffentlichungsnummer: **0 196 494**
**B1**

(12) # EUROPÄISCHE PATENTSCHRIFT

(45) Veröffentlichungstag der Patentschrift:
02.11.88

(21) Anmeldenummer: **86103007.0**

(22) Anmeldetag: **06.03.86**

(51) Int. Cl.⁴: **B 23 K 11/32**

(54) Schweissmaschine zum Anschweissen von Laschen an Blechteile.

(30) Priorität: **18.03.85 CH 1183/85**

(43) Veröffentlichungstag der Anmeldung:
**08.10.86 Patentblatt 86/41**

(45) Bekanntmachung des Hinweises auf die Patenterteilung:
**02.11.88 Patentblatt 88/44**

(84) Benannte Vertragsstaaten:
**CH DE FR GB IT LI NL SE**

(56) Entgegenhaltungen:
**GB-A-1 106 729**
**US-A-1 978 740**
**US-A-2 695 941**
**US-A-3 557 338**

(73) Patentinhaber: **ELPATRONIC AG, Baarerstrasse 117,
CH- 6300 Zug (CH)**

(72) Erfinder: **Opprecht, Paul, Herrenbergstrasse 10,
CH- 8962 Bergdietikon (CH)**
Erfinder: **Stieger, Othmar, Schuermattstrasse 18,
CH- 8962 Bergdietikon (CH)**
Erfinder: **Kramer, Felix, Im Aemmet 3, CH- 8964
Friedlisberg (CH)**

(74) Vertreter: **Hotz, Klaus, Dipl.- El.- Ing. / ETH, c/o
SOUDRONIC AG Industriestrasse 35 Postfach 11,
CH- 8962 Bergdietikon (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schweißmaschine mit mindestens einem Paar Schweißelektroden zum Anschweißen von Laschen an Blechteile für aufreissbare Dosenteile nach einem elektrischen Widerstands-Schweißverfahren.

Aus US-A-3 557 338 ist eine Schweißmaschine bekannt, die Teile an Werkstücke bei hoher Geschwindigkeit anschweißt. Insbesondere werden Aufreißzungen an runde Deckel mit einer an der Peripherie angeordneten, spiralförmigen Ritzung bei einer Schweißgeschwindigkeit von 250 - 300 Teile pro Minute angeschweißt. Die aufgestapelten Teile oder Aufreißzungen werden mittels eines Schlittens einer Einspannvorrichtung zugeführt, die eine rechteckformige Aufnahme mit einem federgelagerten Anschlag aufweist. In der Einspannvorrichtung wird ein metallisches Teil oder Aufreißzunge von einem Permanentmagneten festgehalten. Die Einspannvorrichtung ist zusammen mit einer parallelen, separaten stabförmigen Elektrode auf- und abbewegbar und wird im richtigen Arbeitstakt auf die von einer - nicht näher angegebenen - Förderanlage hindurchgeführten Deckel hindurchgeführt. Somit wird der Deckel mit der separaten Elektrode und mit der Einspannvorrichtung und festgehaltener Aufreißzunge kontaktiert. Der Schweißstrom fliesst dann von der separaten Elektrode über den Deckel und die Aufreißzunge auf die Einspannvorrichtung.

Aus US-A-2 695 941 ist eine Schweißmaschine bekannt, mit der Aufrollschlüssel an die Deckel von Aufreißdosen angeschweißt werden. Die Deckel werden von einem Zulieferungsmagazin über einen drehbaren Abstapler auf ein Bearbeitungskarussell aufgelegt. Die Schlüssel in einem Magazin werden einer mit schlüsselförmigen Aufnahmen versehenen Drehscheibe zugeführt. Ein Teil des Schlüssels wird dann von der Drehscheibe in eine entsprechende Aufnahme des Bearbeitungskarussells gebracht. Der Deckel mit dem Schlüssel an der Oberseite wird dann durch zwei Schweißelektroden einer Schweißstation hindurchgeführt. In einer weiteren Station wird mechanisch überprüft, ob die Schlüssel überhaupt oder richtig angeschweißt sind.

Der vorliegenden Erfindung liegt die Aufgabe zugrunde, eine Schweißmaschine der eingangs beschriebenen Gattung zu schaffen, die imstande ist, Laschen positionsgetreu in kurzen Taktzeiten an Blechteile anzuschweißen.

Diese Aufgabe wird durch den Gegenstand des Patentanspruchs gelöst.

Bei der erfindungsgemäßen Schweißmaschine ist zweckmäßigerweise zwischen zwei Gruppen von Rollen eine Prägewalze zum Einprägen mindestens zweier paralleler, einen Aufreißstreifen begrenzenden Schwächungslinien in jedes Blechteil angeordnet und die Positioniervorrichtung ist derart eingestellt, dass der Aufreißstreifen zwischen die Schweißelektroden gelangt.

Die Erfindung kann ferner dadurch ausgestaltet werden, daß mehrere Gruppen von Rollen, zwischen denen die Blechteile beim Schweissen angeordnet sind, frei drehbar sind, und daß die Positioniervorrichtung einen Mitnehmer aufweist, mit dem die Blechteile zwischen den Rollen dieser Gruppen hindurch in eine Schweißstellung bewegbar sind.

Dabei kann der Blechförderer einen zusätzlichen hin- und herbeweglichen Mitnehmer aufweisen, mit dem die Blechteile aus der Schweißstellung weiterbewegbar sind.

Der Blechförderer kann auch mindestens eine taktweise bewegbare Querförderstrecke aufweisen, die sich quer zu den Schwächungslinien erstreckt. Die Querförderstrecke kann Mitnehmer aufweisen, die taktweise mit der seitlichen Begrenzung der Rollenbahn fluchten.

Dabei ist es vorteilhaft, wenn seitlich neben der Querförderstrecke eine Führungsschiene angeordnet ist, an der die Blechteile mit ihrer quer zu den Schwächungslinien angeordneten, bei der Bewegung zwischen den Rollen hindurch vorderen Kante entlang bewegbar sind.

Bei dieser Ausgestaltung der Schweißmaschine ist es ferner vorteilhaft, wenn ein Abschnitt der seitlichen Führungsschiene sich in der Nachbarschaft der Schweißelektroden erstreckt und die Positioniervorrichtung zum Erzeugen einer Kraft in Richtung der Schwächungslinien ausgebildet ist, die das zwischen den Schweisselektroden liegende Blechteile an dem genannten Abschnitt der Führungsschiene anliegend hält.

Zweckmäßigerweise ist der Laschenförderer taktweise um eine zentrale Achse drehbar und weist mehrere rings um diese Achse in gleichen Umfangsabständen radial angeordneten Aufnahmen für je eine Lasche auf.

Diese Ausführungsform kann weiter dadurch ausgestaltet sein, daß die Aufnahmen radial nach außen durch einen Rand des Laschenförderers begenzt sind und radial nach innen in einen Durchbruch münden, durch den eine der Schweißelektroden in Richtung zu anderen hindurchbewegbar ist.

Jede Aufnahme kann zum Ansaugen der abgestanzten Lasche an einen Saugkanal angeschlossen sein.

In entsprechender Weise kann der Stempel einen Saugnapf zum vorübergehenden Festhalten der abgestanzten Lasche aufweisen.

Gemäss den erwähnten älteren Anmeldungen sind die Schweißelektroden in einer beim Punktschweissen üblichen Weise zangenartig in bezug zueinander beweglich. Erfindungsgemäß ist es besonders zweckmäßig, wenn zwischen den so beweglichen Schweißelektroden und dem Dosenblech bzw. der Lasche ein Elektrodendraht angeordnet ist, der taktweise weiterbewegbar ist.

Die Verwendung von Elektrodendraht ist zwar beim kontinuierlichen Langsnahtschweißen von Dosenkörpern bekannt (DE-C-1 017 042); dabei ist zwischen zwei einander überlappenden Randbereichen eines zylindrisch gerollten Blechteils und je einem rollenförmigen Elektrodenträger ein Elektrodendraht hindurchgeführt, auf dem sich die Elektrodenträger stetig abwälzen. Zum Punktschweißen ist Elektrodendraht jedoch, soweit ersichtlich, bisher nicht verwendet worden; diese erfindungsgemäße Verwendung ist äußerst sparsam, da einwandfreie Schweißungen im Dauerbetrieb der erfindungsgemäßen Schweißmaschine ohne besondere Maßnahmen, beispielsweise der in EP-A-0 176 052 bekannten Art, schon dann erzielt werden können, wenn der Elektrodendraht nach dem Anschweißen jeder Lasche um einen kleinen Schritt weiterbewegt wird.

Schließlich ist es besonders vorteilhaft, wenn der Positioniervorrichtung zwei Paar Schweißelektroden sowie zwei Laschenförderer zum Anschweißen je einer Lasche an beide Enden eines gemeinsamen Aufreißstreifens oder an je ein Ende zweier Aufreißstreifen zugeordnet sind. Auf diese Weise läßt sich die Leistungsfähigkeit der erfindungsgemäßen Schweißmaschine verdoppeln, da die Blechteile mit je zwei angeschweißten Laschen anschließend quer zum Aufreißstreifen bzw. zwischen zwei Aufreißstreifen parallel zu diesen durchtrennt werden können, sodaß aus jedem Blechteil zwei Dosenteile mit je einer Lasche entstehen, aus denen anschliessend beispielsweise je eine runde Dosenzarge geformt werden kann.

Ausführungsbeispiele der Erfindung werden im folgenden anhand schematischer Zeichnungen mit weiteren Einzelheiten erläutert. Es zeigt:

| | |
|---|---|
| Fig. 1 | eine Seitenansicht einer ersten erfindungsgemäßen Schweißmaschine, |
| Fig. 1a | eine Variante zu Fig. 1, |
| Fig. 2 | die zu Fig. 1 und Fig. 1a gehörige, teilweise als waagerechter Schnitt II - II in Fig. 1 gezeichnete Draufsicht, |
| Fig. 3 | den senkrechten Schnitt III - III in Fig. 1, |
| Fig. 4 | den senkrechten Schnitt IV - IV in Fig. 1 und Fig. 1a, |
| Fig. 5 | den senkrechten Schnitt V - V in Fig. 1 und Fig. 1a, |
| Fig. 6 | eine zweite erfindungsgemäße Schweißmaschine in perspektivischer Ansicht schräg von oben, |
| Fig. 6a | eine Variante zu Fig. 6 |
| Fig. 7 | eine zu Fig. 6 und Fig. 6a gehörige Draufsicht, |
| Fig. 8 | den senkrechten Schnitt VIII - VIII in Fig. 7, |
| Fig. 9 | den senkrechten Schnitt IX - IX in Fig. 7 und |
| Fig. 10 | eine die Fig. 6 ergänzende Schrägansicht. |

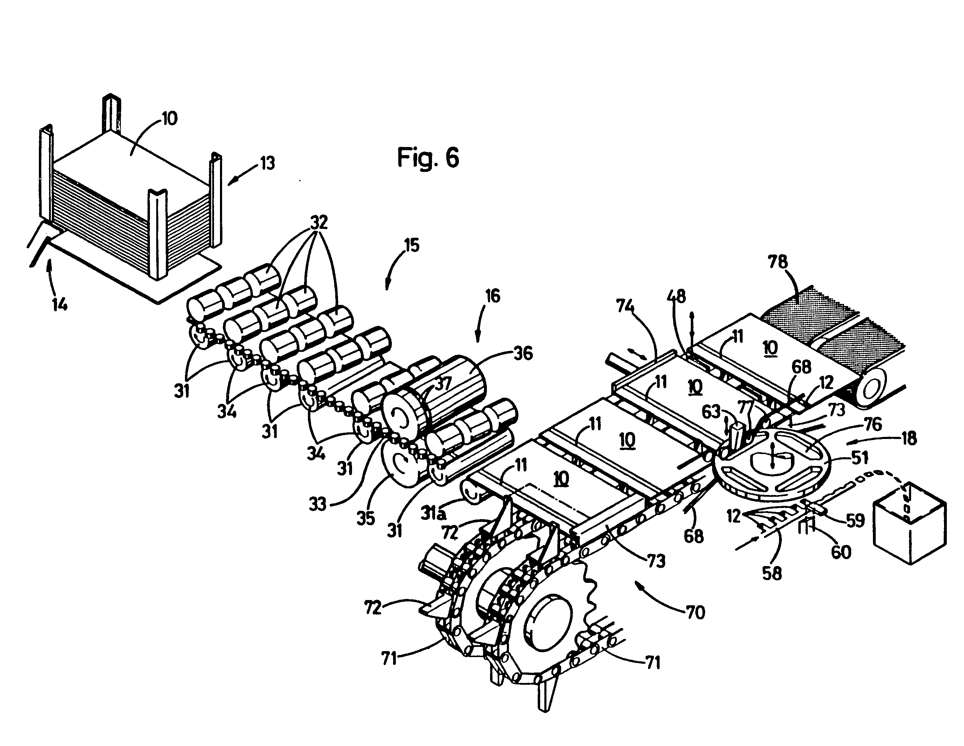

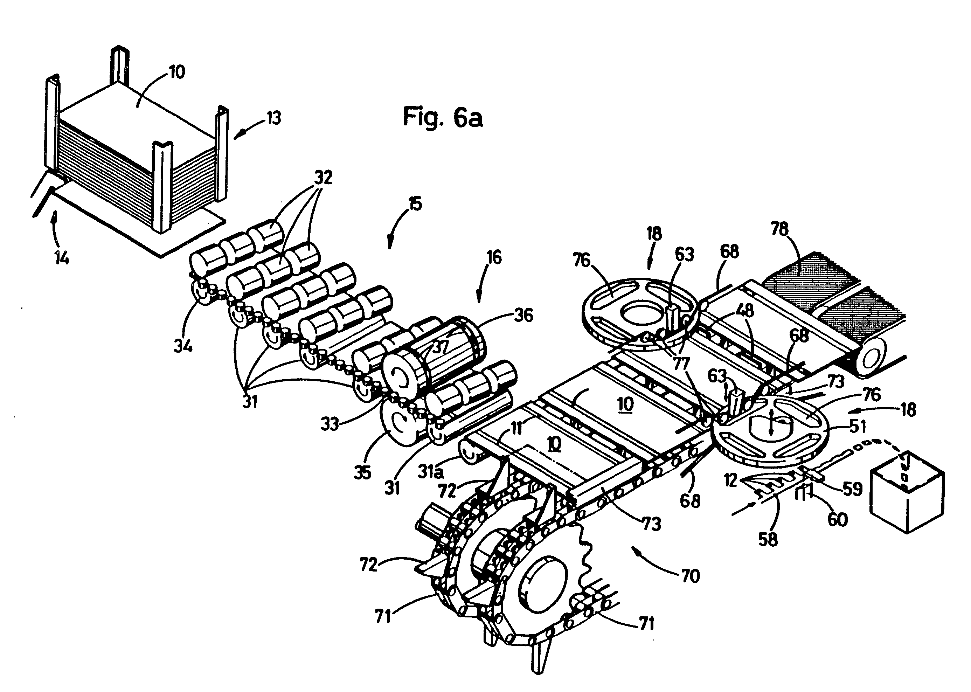

Die dargestellten Schweißmaschinen haben die Aufgabe, rechteckige Blechteile 10 aus Weißblech von beispielsweise 0,2 mm Dicke mit je einem zu den Längsseiten der Blechteile parallelen Aufreißstreifen 11 oder mit zwei solchen Aufreißstreifen (Fig. 6a) zu versehen und an ein Ende jedes dieser Aufreißstreifen eine Lasche 12 anzuschweißen. Jeder der dargestellten Maschinen ist ein Magazin 13 zugeordnet, in dem die Blechteile 10 gestapelt bereitgehalten werden. Unterhalb des Magazins 13 ist ein Abstapler 14 angeordnet, und an diesen schließt sich ein Blechförderer 15 an, der die Blechteile 10 nacheinander in einer waagerechten Ebene weiterfördert. Dem Blechförderer 15 ist eine Prägestation 16 zum Prägen der Aufreißstreifen 11 zugeordnet, und daran schließt sich eine Positioniervorrichtung 17 an, welche die Blechteile nacheinander in einer genau vorbestimmten Lage im Arbeitsbereich eines Laschenförderers 18 und einer Schweißstation 19 bzw. zweier Laschenförderer 18 und zweier Schweißstationen 19 (Fig. 6a) festhält.

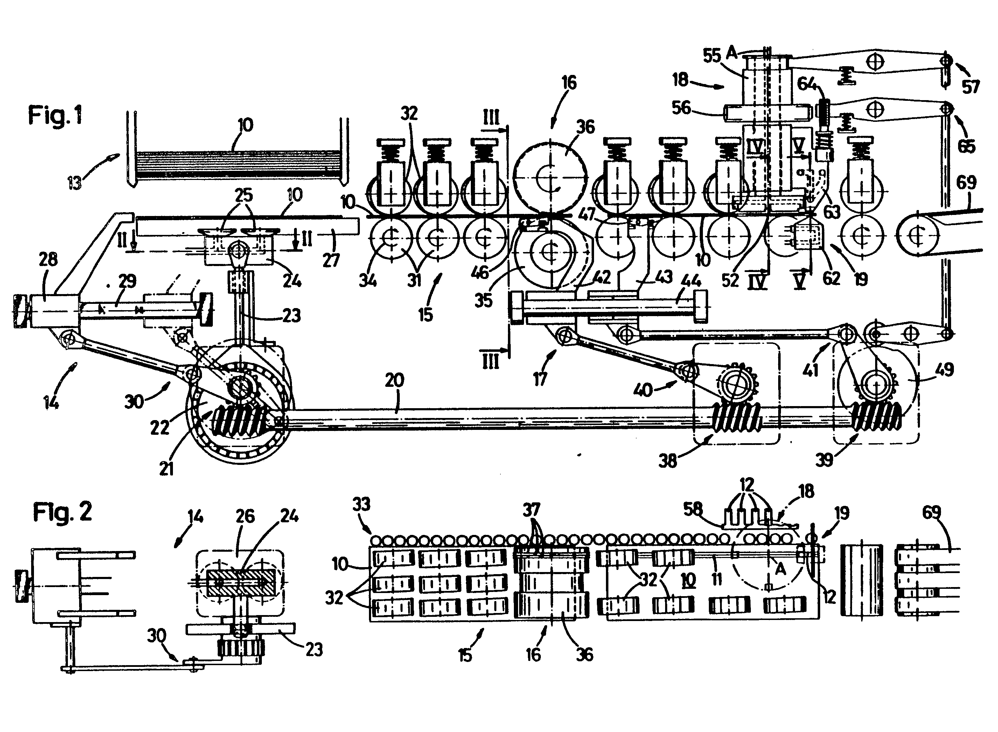

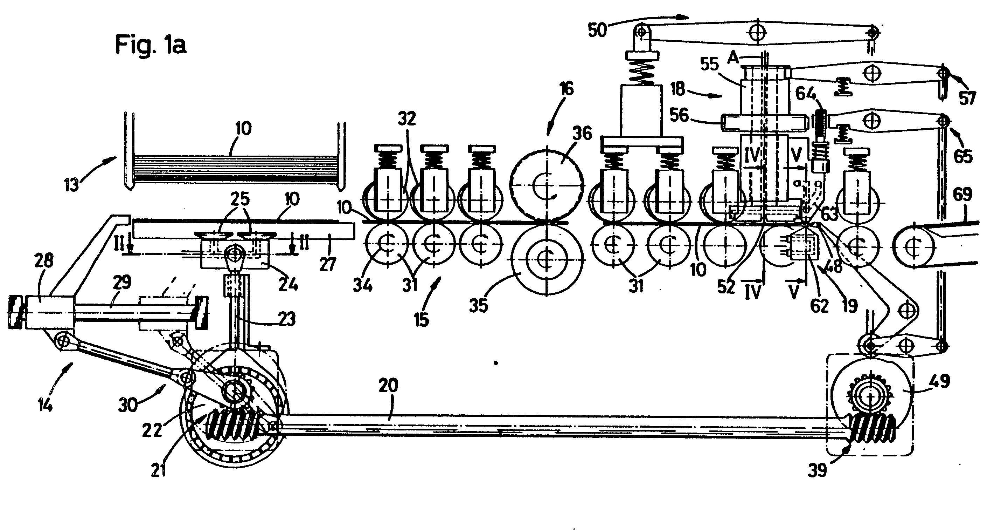

Die genannten Vorrichtungen und Baugruppen, die bei jeder der dargestellten Schweißmaschinen vorhanden sind, werden von einer gemeinsamen Steuerwelle 20 gesteuert, die in Fig. 1 und 1a teilweise gezeichnet und von einem nicht gezeichneten Motor antreibbar ist. Eine entsprechende Steuerwelle hat man sich auch bei der in Fig. 6 dargestellten Schweißmaschine und deren in Fig. 6a gezeichneten Variante vorzustellen.

Gemäß Fig. 1 und 1a ist die Steuerwelle 20 durch einen Schneckentrieb 21 mit einem zum Abstapler 14 gehörigen Exzenter 22 verbunden, auf dem ein Pleuel 23 gelagert ist. Das Pleuel 23 ist gelenkig mit einem Kreuzkopf 24 verbunden, der an seiner Oberseite zwei Saugnäpfe 25 aufweist und in einer Aussparung 26 eines Tisches 27 auf- und abbeweglich geführt ist.

Die Saugnäpfe 25 saugen sich gegen Ende jedes Aufwärtshubes an der Unterseite des unteresten im Magazin 13 bereitgehaltenen Blechteils 10 fest, ziehen dieses Blechteil beim nächsten Abwärtshub aus dem Magazin nach unten heraus und legen es auf dem Tisch 27 ab.

Zum Abstapler 14 gehört bei jeder der dargestellten Maschinen ferner ein gabelförmiger Schieber 28, der an einer waagerechten Stange 29 geführt und von der Steuerwelle 20 über den Schneckentrieb 21 und einem Kurbeltrieb 30 hin- und herbewegbar ist, um bei jedem Arbeitszyklus das jeweils auf dem Tisch 27 liegende Blechteil 10 vom Abstapler 14 zum Blechförderer 15 zu schieben.

Der Blechförderer 15 weist mehrere Gruppen von unteren Rollen 31 und oberen Rollen 32 auf, die um je eine waagerechte Achse drehbar sind. Die Achsen der unteren Rollen 31 erstrecken sich im rechten Winkel zu den Längskanten der Blechteile 10; die oberen Rollen 32 sind unter einem kleinen Winkel windschief zu den unteren Rollen 31 angeordnet und infolgedessen bestrebt, jedes zwischen den Rollen 31 und 32 hindurchlaufende Blechteil 10 mit einer seiner beiden Längskanten an einer seitlichen Begrenzung 33 anliegend zu halten. Die seitliche Begrenzung 33 ist, wie angedeutet, von einer geradlinigen Reihe senkrecht gelagerter Rollen gebildet.

Die letzte untere Rolle 31a (Fig 6 und 6a) ist eine Magnetwalze, welche je nach Blechlänge einstellbar ist.

Die unteren Rollen 31 sind ortsfest gelagert; einige von ihnen - in Fig. 1 die erste bis dritte untere Rolle 31, in Fig. 1a sowie Fig. 6 und 6a zusätzlich weiter rechts angeordnete untere Rollen 31 - sind von einem nicht dargestellten Motor aus drehantreibbar; diese Rollen sind mit je einem Pfeil 34 gekennzeichnet. Die oberen Rollen 32 sind frei drehbar und senkrecht federnd abgestützt.

Hinter der dritten (Fig. 1 und 1a) bzw. fünften (Fig. 6 und 6a) drehantreibbaren unteren Rolle 31 ist parallel zu diesen Rollen eine kräftige Stützwalze 35 gelagert und über dieser ist parallel zu den oberen Rollen 32 eine Prägewalze 36 gelagert, die gemäß Fig. 1, 1a und 6 einen Schneidensatz von drei kreisringförmigen Schneiden 37, gemäß Fig. 6a hingegen zwei Satz solcher Schneiden 37 aufweist, die nahe je einem Ende der Prägewalze angeordnet sind. Stützwalze 35 und Prägewalze 36 sind mit einer auf die Umfangsgeschwindigkeit der unteren Rollen 31 abgestimmten Geschwindigkeit drehantreibbar und prägen in jedes zwischen ihnen hindurchlaufende Blechteil 10 parallel zu dessen Längskanten einen bzw. zwei (Fig. 6a) Aufreißstreifen 11 ein.

An der Steuerwelle 20 sind gemäß Fig. 1 ein zweiter und ein dritter Schneckentrieb 38 und 39 angeordnet, die über je einen Kurbeltrieb 40 bzw. 41 je einen Mitnehmer 42 bzw. 43 antreiben. Die Mitnehmer 42 und 43 sind auf je einer zur Förderrichtung des Blechförderers 15 parallelen Stange 44 sowie an einer gemeinsamen Führungsleiste 45 geführt. Jeder der Mitnehmer 42 und 43 trägt eine nach oben federnd vorgespannte Klinke 46 bzw. 47.

Der Mitnehmer 42 gehört zur Positioniervorrichtung 17; er greift mit seiner Klinke 46 bei jeden Arbeitszyklus der Schweißmaschine hinter ein Blechteil 10, das zwischen Stützwalze 35 und Prägewalze 36 hindurchgelaufen ist. Die Klinke 46 schiebt dieses Blechteil 10 in eine genau vorbestimmte Position, in der sein Aufreißstreifen 11 im Arbeitsbereich der Schweißstation 19 steht. Der Mitnehmer 43 kann hingegen dem Blechförderer 15 zugeordnet werden; er hat die Aufgabe, das letztgenannte Blechteil 10 nach dem Aufschweißen einer Lasche 12 weiter zu fördern, bis es von einer weiteren angetriebenen unteren Rolle 31 mitgenommen wird.

Die in Fig. 1a dargestellte Variante unterscheidet sich von Fig. 1 im wesentlichen dadurch, daß die Mitnehmer 42 und 43 samt zugehörigen Antrieben und Klinken fortgelassen sind und die Positioniervorrichtung 17 einen in die Bewegungsbahn der Blechteile 10 bewegbaren Anschlag 48 aufweist, der von der Steuerwelle 20 über eine Kurvenscheibe 49 und eine Hebelanordnung gesteuert ist. Die erste und die zweite auf die Stützwalze 35 folgende untere Rolle 31 fördern jeweils das mit einem Aufreißstreifen 11 versehen Blechteil 10 gegen den Anschlag 48, um es zum Aufschweißen einer Lasche 12 zu positionieren. Sobald dieses Blechteil 10 den Anschlag 48 erreicht hat, werden die oberen Rollen 32, die den letztgenannten angetriebenen unteren Rollen 31 zugeordnet sind, mit einer Hubvorrichtung 50, die ebenfalls von der Kurvenscheibe 49 gesteuert ist, abgehoben, damit die sich weiterdrehenden unteren Rollen 31 keine Spuren auf dem Blechteil 10 hinterlassen.

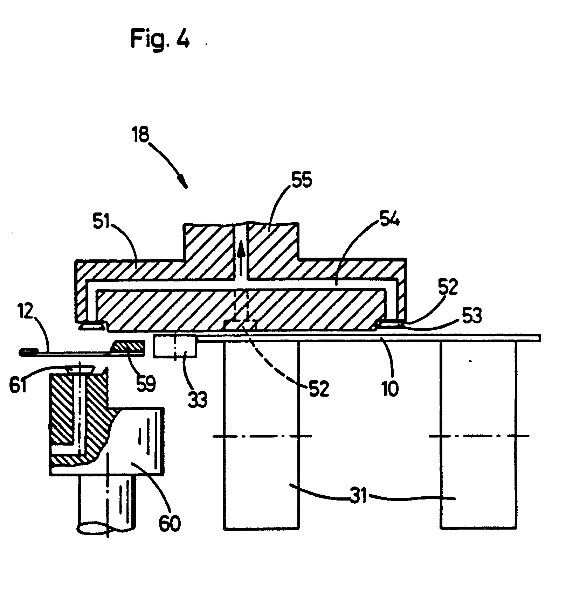

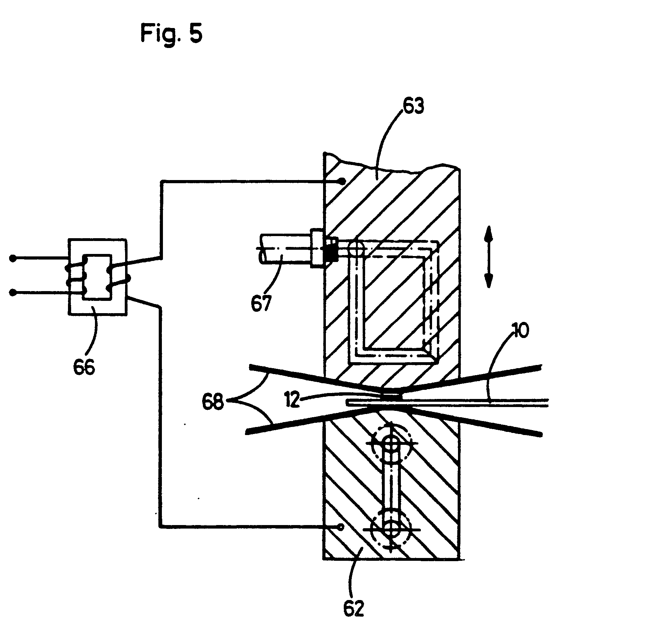

Bei der in Fig. 1 bis 5 dargestellten Schweißmaschine einschließlich ihrer in Fig. 1a gezeigten Variante gehört zum Laschenförderer 18 eine im wesentlichen waagerechte, kreisförmige Platte 51, die um eine senkrechte Achse A schrittweise um jeweils 90° drehbar ist und in Umfangsabständen von ebenfalls 90° je eine nach unten offene Aufnahme 52 für eine Lasche 12 aufweist. Die Aufnahmen 52 enthalten je einen Saugnapf 53, der an einen Saugkanal 54 angeschlossen ist. Die Platte 51 ist an einer senkrechten Welle 55 befestigt, die ebenfalls von der Steuerwelle 20 aus, über ein Getriebe 56 drehantreibbar sowie über eine Hubvorrichtung 57 heb- und senkbar ist.

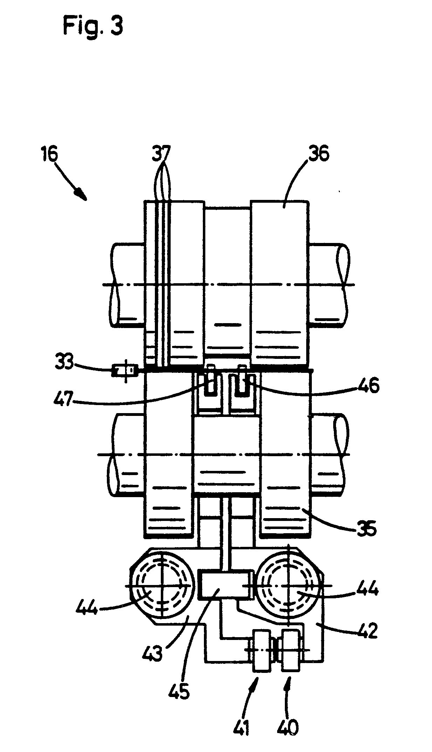

Längs einer Sekante der kreisförmigen Platte 51 ist ein Blechstreifen 58 geführt, an dem in vorbestimmten Abständen je eine Lasche 12 vorgestanzt ist. Das freie Ende jeder Lasche 12 ist in Form eines Dreiecks umgeschlagen; hierzu wird auf eine der erwähnten älteren Patentanmeldungen (CH-Anmeldung Nr. 4582/84-2, bzw. EP-PA-85.111.945.3) verwiesen. Der Blechstreifen 58 ist mit einer nicht dargestellten, ebenfalls von der Steuerwelle 20 gesteuerten Vorrichtung schrittweise vorschiebbar, sodaß bei jedem Arbeitszyklus der Schweißmaschine die vorderste noch mit dem Blechstreifen verbundene Lasche 12 unter einer der Aufnahmen 52 zu liegen kommt, und zwar derart, daß diese Lasche sich gemäß Fig. 2 radial in Bezug zur Achse A erstreckt und das umgeschlagene Ende dieser Lasche außerhalb des äußeren Randes der Platte 51 liegt. Das radial innere, noch mit dem Blechstreifen 58 verbundene Ende dieser Lasche 12 liegt zwischen einer Stanzmatrize 59 und einem auf- und abbeweglichen Stempel 60, der die Lasche vom Blechstreifen 58 abtrennt und sie mit einem an ihm befestigten Saugnapf 61 vorübergehend festhält, bis die Lasche sicher in der zugehörigen Aufnahme 52 liegt und von dem dort angeordneten Saufnapf 53 festgehalten wird. Nun wird der Laschenförderer 18 um 90° um die Achse A gedreht, wodurch die zuletzt abgetrennte Lasche 12 in die Schweißstation 19 gelangt.

In der Schweißstation 19 sind zwei Schweißelektroden 62 und 63 senkrecht übereinander angeordnet. Die untere Schweißelektrode 62 ist ortsfest; die obere Schweißelektrode 63 ist über einen einstellbaren Gewindebolzen 64 an einer Hubvorrichtung 65 aufgehängt und gegen diese nach unten federnd vorgespannt. Die Hubvorrichtung 65 ist über ein Hebelgestänge von der Kurvenscheibe 49 oder einem entsprechenden, ebenfalls von der zentralen Steuerwelle 20 angetriebenen Steuerglied gesteuert.

Die beiden Schweißelektroden 62 und 63 sind in bei Punktschweißmaschinen üblicher Weise mit einem Schweißtransformator 66 verbunden und an einen Kühlmittelkreislauf 67 angeschlossen. Zwischen der unteren Schweißelektrode 62 und dem über ihr positionierten Blechteil 10 sowie zwischen der oberen Schweißelektrode 63 und der unter ihr noch in der erwähnten Aufnahme 52 der Platte 51 gehaltenen Lasche 12 ist je ein quer zu den Aufreißstreifen 11 verlaufender Abschnitt eines Elektrodendrahts 68 angeordnet. Der Elektrodendraht 68 hat einen abgeplatteten, rechteckähnlichen Querschnitt und ist über in Fig. 1 bis 5 nicht dargestellte Umlenkrollen geführt und schrittweise bewegbar.

Bei jedem Arbeitszyklus der Schweißmaschine führt die obere Schweißelektrode 63 einen Abwärtshub aus, wobei über die beiden genannten Abschnitte des Elektrodendrahts 68, sowie die Lasche 12 und das Blechteil 10 der Sekundärstromkreis des Schweißtransformators 66 geschlossen und die Lasche 12 mit dem Aufreißstreifen 11 des betreffenden Blechteils 10 verschweißt wird. Unmittelbar darauf führt der Laschenförderer 18 einen Aufwärtshub aus, sodass er die angeschweißte Lasche 12 freigibt.

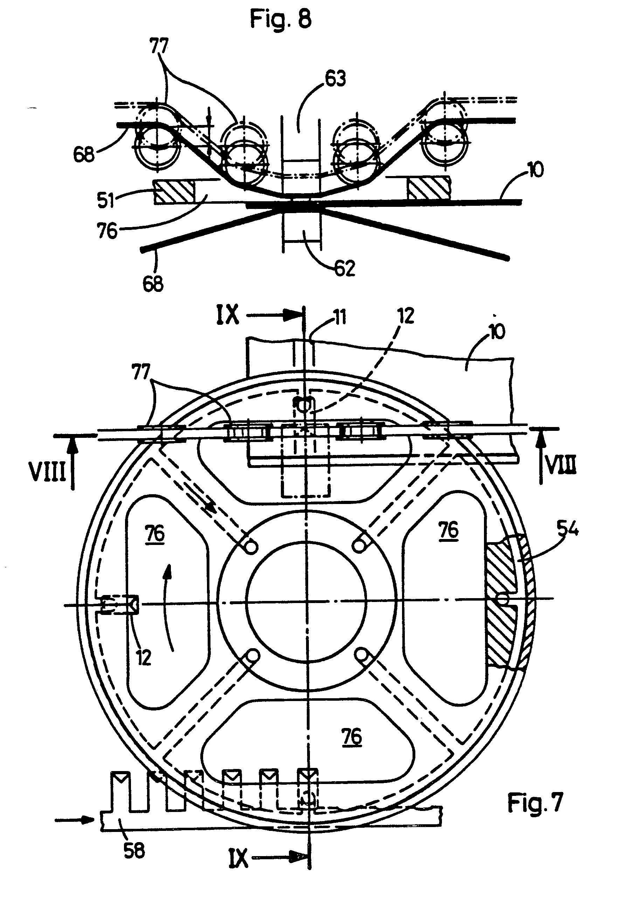

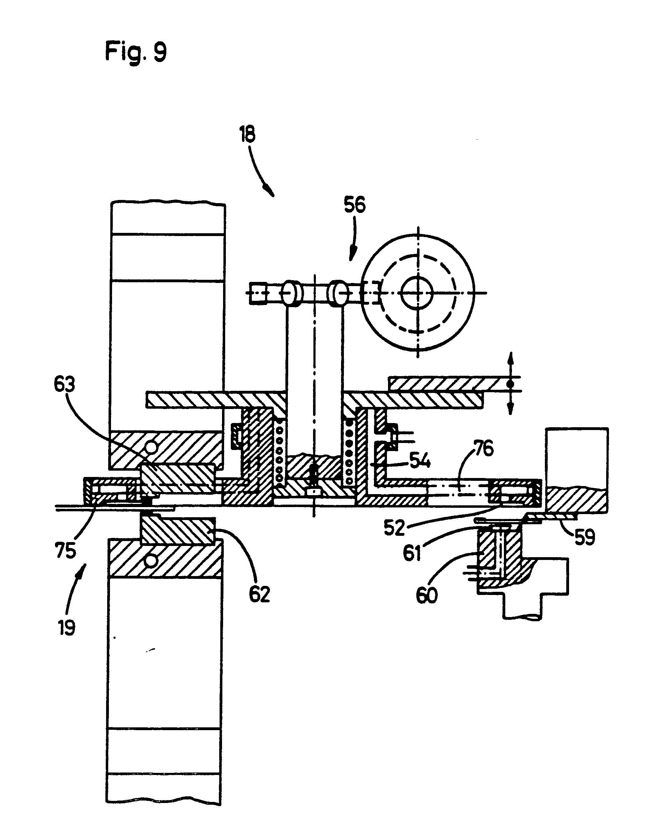

Die Schweißmaschine gemäß Fig. 6 bis 10 samt ihrer Variante gemäß Fig. 6a unterscheidet sich von der in Fig. 1 bis 5 dargestellten zunächst dadurch, daß hinter der Stützwalze 35 und Prägewalze 36 nur zwei untere Rollen, die angetrieben sind, sowie ein Satz oberer Rollen 32 angeordnet sind. Dahinter erstreckt sich in einer waagerechten Ebene rechtwinkelig zur Förderrichtung des Blechförderers 15 und somit auch rechtwinklig zu den Aufreißstreifen 11 eine Querförderstrecke 70, die im dargestellten Beispiel zwei parallele Rollenketten 71 und in Abständen an diesen angeordnete Mitnehmer 72 aufweist. Die Rollenketten 71 sind, ebenfalls über die zentrale Steuerwelle 20, derart schrittweise antreibbar, daß bei ihrem Stillstand jeweils ein Paar Mitnehmer 72 mit der seitlichen Begrenzung 33 des Blechförderers 15 annähernd fluchtet, wobei zwischen diesem und dem vorangehenden Paar Mitnehmer 72 ausreichend Platz zum Aufnehmen eines vom Blechförderer 15 abgegebenen Blechteils 10 frei ist. Dieses Blechteil wird von der vordersten angetriebenen unteren Rolle 31a gegen eine seitliche Führungsschiene 73 geschoben, die sich parallel zur Querförderstrecke 70 erstreckt.

Das letztgenannte Blechteil 10 gelangt nach zwei Förderschritten der Rollenketten 71 in die Schweißstation 19, in der dieses Blechteil mit seiner in Fig. 6 und 6a dem Betrachter zugewandten Schmalseite an einem Endabschnitt der Führungsschiene 73 anliegt. Der gegenüberliegenden Schmalseite des Blechteils 10 ist ein Schieber 74 zugeordnet, der dafür sorgt, daß die Anlage an der Führungsschiene 73 erhalten und dadurch das Blechteil in Längsrichtung des Aufreißstreifens 11 positioniert wird. In Richtung quer zum Aufreißstreifen 11 wird das Blechteil 10 dadurch positioniert, daß ein Anschlag 48 ähnlich dem in Fig. 1a dargestellten in eine wirksame Stellung aufwärtsbewegt wird.

Gemäß Fig. 6 bis 9 ist der Laschenförderer 18 mit dem in Fig. 1 bis 5 dargestellten weitgehend vergleichbar; seine Platte 51 hat jedoch einen nach unten vorstehenden, kreisförmigen äußeren Rand 75, der die Aufnahmen 52 für die Laschen 12 radial nach außen begrenzt. Der Blechstreifen 58 ist hier derart angeordnet, daß jeweils die zum Abstanzen positionierte Lasche 12 mit ihrem umgeschlagenen Ende radial nach innen gerichtet ist. Dabei liegt das umgeschlagene Ende dieser Lasche 12 unterhalb eines von vier Durchbrüchen 76, die je einer der Aufnahmen 52 zugeordnet und so groß sind, daß die obere Schweißelektrode 63 samt gemeinsam mit ihr heb- und senkbaren Führungsrollen 77 für den Elektrodendraht 68 berührungsfrei durch jeden dieser Durchbrüche 76 hindurchbewegbar ist.

Die über die Schweißelektroden 62 und 63 laufenden Abschnitte des Elektrodendrahts 68 erstrecken sich wiederum im rechten Winkel zum Aufreißstreifen 11 und zur Lasche 12, die aufgeschweißt werden soll. Die Richtung dieser Abschnitte des Elektrodendrahts 68 stimmt - im Gegensatz zu Fig. 1 bis 5 - mit der Richtung überein, in der die Blechteile 10 zwischen den Schweißelektroden 62 und 63 hindurchbewegt werden.

Die Variante gemäß Fig. 6a unterscheidet sich von Fig. 6 dadurch, daß - abgesehen von der schon erwähnten Verdoppelung der Schneidenanordnung an der Prägewalze 36 - beiderseits der Querfördererstrecke 70 je ein Laschenförderer 18 und je eine Schweißstation 19 angeordnet sind, sodaß an je einem Ende jedes der beiden von der Prägewalze 36 geprägten Aufreißstreifen 11 je eine Lasche angeschweißt werden kann.

Die Schweißmaschine gemäß Fig. 6 bis 9 samt ihrer Variante gemäß Fig. 6a hat gegenüber der in Fig. 1 bis 5 dargestellten Schweißmaschine eine Reihe von Vorteilen:

- Zum Ersten ist die Schweißmaschine, wie Fig. 6 und 6a deutlich zeigen, weniger lang.
- Zum Zweiten ist eine schnellere Arbeitsweise möglich, da die Laschen 12 am Laschenförderer 18 durch dessen radial äußeren Rand 75 abgestützt sind und deshalb durch Zentrifugalkräfte nicht verschoben werden können.

- Zum Dritten ist die Überlappung zwischen dem Laschenförderer 18 und dem in der Schweißstation 19 stehenden Blechteil 10 gering, sodaß der Laschenförderer für Inspektions- und Wartungszwecke besser zugänglich ist. Dieser geringen Überlappung ist es auch zu danken, daß die in Fig. 6a dargestellte doppelte Anordnung von Laschenförderern 18 und Schweißstationen 19 möglich ist.

- Zum Vierten bewirkt die Übereinstimmung der Förderrichtung der Querförderstrecke 70 und der Richtung, in welcher der Elektrodendraht 68 über die Schweißelektroden 62 und 63 läuft, daß das Blechteil 10 und die Lasche 12, die miteinander verschweißt worden sind, sich bei der Weiterbewegung leicht vom Elektrodendraht lösen, ohne daß ein etwa vorhandener Korrosionsschutz, besonders ein Zinnüberzug bei Weißblech, beschädigt wird.

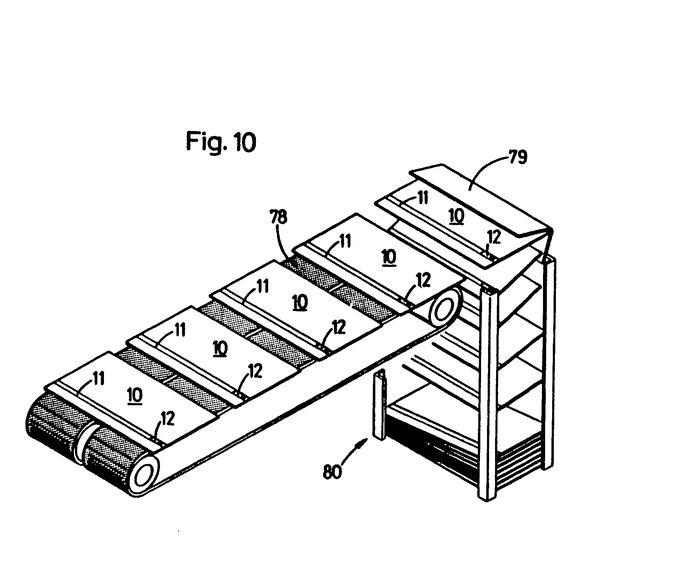

Jeder der dargestellten Schweißmaschinen ist ein Förderband 78 zum Wegfördern der Blechteile 10 mit aufgeschweißten Laschen 12 zugeordnet. In Fig. 10 ist das Förderband 78 dargestellt, da sich an die Querförderstrecke 70 gemäß Fig. 6 anschließt. Hinter dem Ende des Förderbandes 78 ist ein abgewinkeltes Fangblech 79 angeordnet, das die Blechteile 10 in ein Stapelmagazin 80 fallen läßt.

Wenn die Blechteile 10 gemäß Fig. 6a mit je zwei Aufreißstreifen 11 versehen worden sind, an die je eine Lasche 12 angeschweißt worden ist, dann werden diese Blechteile in einem nachfolgenden Arbeitsgang parallel zu den Aufreißstreifen mittig geteilt. Es besteht aber auch die Möglichkeit, die in Fig. 6a dargestellte Prägewalze 36 durch die in Fig. 6 dargestellte zu ersetzen, die an jedem Blechteil 10 nur einen einzigen Aufreißstreifen 11 entstehen läßt. In diesem Fall können zwei Laschen 12 an je einem Ende des Aufreißstreifens 11 angeschweißt werden, wenn die in Fig. 6a dargestellten Laschenförderer 18 und Schweißstationen 19 einander genau diametral gegenüber angeordnet sind. Das auf diese Weise mit zwei Laschen 12 versehene Blechteil 10 wird anschließend quer zum Aufreißstreifen 11 in zwei Teile geteilt, die je eine Lasche 12 aufweisen.

**Patentansprüche**

1. Schweißmaschine mit mindestens einem Paar Schweißelektroden (62, 63) zum Anschweißen von Laschen (12) an Blechteile (10) für aufreißbare Dosenteile nach einem elektrischen Widerstands-Schweißverfahren, mit
- einem die Blechteile (10) taktweise zwischen den Schweißelektroden (62, 63) hindurchbewegenden Blechförderer (15) mit einer Rollenbahn, die eine seitliche Begrenzung (33) und mehrere Gruppen von Rollen (32, 33) aufweist, zwischen denen die Blechteile (10) hintereinander hindurchbewegbar sind, wobei die Rollen mit Vorspannung an Ober- und Unterseite des Blechteils anliegen und mindestens einige Rollen (32) spitzwinkelig zur Bewegungsrichtung des Blechteils angeordnet sind und dieses gegen die seitliche Begrenzung (33) schieben,
- eine die Blechteile (10) in einer definierten Stellung zwischen den Schweißelektroden (62, 63) festsetzenden Positioniervorrichtung (17) mit einem Anschlag (48), der taktweise in die Bewegungsbahn der Blechteile (10) bewegbar ist, und
- einem die Laschen (12) auf den Arbeitstakt des Blechförderers (15) abgestimmt zwischen den Schweißelektroden (62, 63) an jeweils ein Blechteil (10) anlegenden Laschenförderer (18) mit mindestens einer Aufnahme (52) für eine Lasche (12), die aus dem Bereich eines Stempels (60) zum Abstanzen der Lasche von einem Blechstreifen (58) in den Bereich der Schweißelektroden (62, 63), und zurück, beweglich ist.

2. Schweißmaschine nach Anspruch 1, dadurch gekennzeichnet, daß zwischen zwei Gruppen von Rollen (31, 32) eine Prägewalze (36) zum Einprägen mindestens zweier paralleler, einen Aufreißstreifen (11) begrenzender Schwächungslinien in jedes Blechteil (10) angeordnet ist und die Positioniervorrichtung (17) derart eingestellt ist, daß der Aufreißstreifen (11) zwischen die Schweißelektroden (62, 63) gelangt.

3. Schweißmaschine nach Anspruch 1, dadurch gekennzeichnet, daß mehrere Gruppen von Rollen (32, 33), zwischen denen die Blechteile (10) beim Schweißen angeordnet sind, frei drehbar sind, und die Positioniervorrichtung (17) einen Mitnehmer (42) aufweist, mit dem die Blechteile (10) zwischen den Rollen (31, 32) dieser Gruppen hindurch in eine Schweißstellung bewegbar sind.

4. Schweißmaschine nach Anspruch 3, dadurch gekennzeichnet, daß der Blechförderer (15) einen zusätzlichen hin- und herbeweglichen Mitnehmer (43), aufweist, mit dem die Blechteile (10) aus der Schweißstellung weiterbewegbar sind.

5. Schweißmaschine nach Anspruch 1 für Blechteile mit durch Schwächungslinien begrenzten Aufreißstreifen, dadurch gekennzeichnet, daß der Blechförderer (15) mindestens eine taktweise bewegbare Querförderstrecke (70) aufweist, die sich quer zu den Schwächungslinien erstreckt.

6. Schweißmaschine nach Anspruch 5, dadurch gekennzeichnet, daß die Querförderstrecke (70) Mitnehmer (72) aufweist, die taktweise mit der seitlichen Begrenzung (33) der Rollenbahn fluchten.

7. Schweißmaschine nach Anspruch 6, dadurch gekennzeichnet, daß seitlich neben der Querförderstrecke (70) eine Führungsschiene (73) angeordnet ist, an der die Blechteile (10) mit Ihrer quer zu den Schwächungslinien (11) angeordneten, bei der Bewegung zwischen den Rollen (31, 32) hindurch vorderen Kante entlang bewegbar sind.

8. Schweißmaschine nach Anspruch 7, dadurch gekennzeichnet, daß ein Abschnitt der seitlichen Führungsschiene (73) sich in der Nachbarschaft der Schweißelektroden (62, 63) erstreckt und die Positioniervorrichtung (17) zum Erzeugen einer Kraft in Richtung der Schwächungslinien (11) ausgebildet ist, die das zwischen den Schweißelektroden (62, 63) liegende Blechteil (10) an der Führungsschiene (73) anliegend hält.

9. Schweißmaschine nach Anspruch 1, dadurch gekennzeichnet, daß der Laschenförderer (18) taktweise um eine zentrale Achse (A) drehbar ist und mehrere rings um diese Achse in gleichen Umfangsabständen radial angeordnete Aufnahmen (52) für je eine Lasche (12) aufweist.

10. Schweißmaschine nach Anspruch 9, dadurch gekennzeichnet, daß die Aufnahmen (52) radial nach außen durch einen Rand (75) des Laschenförderers (18) begrenzt sind und radial nach innen in einen Durchbruch (76) münden, durch den eine der Schweißelektroden (62, 63) in Richtung zur anderen hindurchbewegbar ist.

11. Schweißmaschine nach Anspruch 9 oder 10, dadurch gekennzeichnet, daß jede Aufnahme (52) zum Ansaugen der abgestanzten Lasche (12) an einen Saugkanal (54) angeschlossen ist.

12. Schweißmaschine nach Anspruch 9, dadurch gekennzeichnet, daß der Stempel (60) einen Saugnapf (61) zum vorübergehenden Festhalten der abgestanzten Lasche (12) aufweist.

13. Schweißmaschine nach Anspruch 1, deren Schweißelektroden (62, 63) in einer beim Punktschweißen üblichen Weise zangenartig in Bezug zueinander beweglich sind, dadurch gekennzeichnet, daß zwischen den Schweißelektroden (62, 83) und dem Blechteil (10) der Lasche (12) ein Elektrodendraht (68) angeordnet ist, der taktweise weiterbewegbar ist.

14. Schweißmaschine nach Anspruch 1, dadurch gekennzeichnet, daß der Positioniervorrichtung (17) zwei Paar Schweißelektroden (62, 63) sowie zwei Laschenförderer (18) zum Anschweißen je einer Lasche (12) an beide Enden eines gemeinsamen Aufreißstreifens (11) oder an je ein Ende zweier Aufreißstreifen (11) zugeordnet sind.

**Claims**

1. A welding machine having at least one pair of welding electrodes (62, 63) for welding tongues (12) onto sheet-metal parts (10) for tear-open can parts, by an electrical resistance welding process, having
- a sheet-metal conveyor (15) moving sheet-metal parts (10) through in step, between the welding electrodes (62, 63) and having a roller conveyor which comprises a lateral boundary means (33) and a plurality of groups of rollers (32, 33) through between which the sheet-metal parts (10) can be moved one behind the other, the rollers bearing with initial loading against the top and bottom of the sheet-metal part and at least some rollers (32) being disposed at an acute angle to the direction of movement of the sheet-metal part and pushing this against the lateral boundary means (33),
- a positioning device (17) locating the sheet-metal parts (10) in a defined position between the welding electrodes (62, 63), and having a stop (48) which is movable cyclically into the path of movement of the sheet-metal parts (10), and
- a tongue conveyor (18) placing the tongues (12) against one sheet-metal part (10) at a time, between the welding electrodes (62, 63) in accordance with the working cycle of the sheet-metal conveyor (15) and having at least one receiver (52) for a tongue (12), which is movable out of the region of a punch (60) for punching the tongue from a sheet-metal strip (58) into the region of the welding electrodes (62, 63) and back.

2. A welding machine as claimed in claim 1, characterised in that disposed between two groups of rollers (31, 32) is an impressing roll (36) to impress at least two parallel weakening lines defining a tear-off strip (11) in each sheet-metal part (10) and the positioning device (17) is adjusted in such a manner that the tear-off strip (11 comes between the welding electrodes (62, 63).

3. A welding machine as claimed in claim 1, characterised in that a plurality of groups of rollers (32, 33), between which the sheet-metal parts (10) are disposed during the welding, are freely rotatable and the positioning device (17) comprises a pusher (42) whereby the sheet-metal parts (10) can be moved through between the rollers (31, 32) of these groups into a welding position.

4. A welding machine as claimed in claim 3, characterised in that the sheet-metal conveyor (15) comprises an additional reciprocable pusher (43) whereby the sheet-metal parts (10) can be moved on out of the welding position.

5. A welding machine as claimed in claim 1 for sheet-metal parts having tear-off strips defined by weakening lines, characterised in that the sheet-metal conveyor (15) comprises at least one transverse conveying track (70) which can be moved cyclically and which extends transversely to the weakening lines.

6. A welding machine as claimed in claim 5, characterised in that the transverse conveying track (70) comprises pusher dogs (72) which come cyclically into alignment with the lateral boundary (33) of the roller conveyor.

7. A welding machine as claimed in claim 6, characterised in that disposed laterally beside the transverse conveying track (70) is a guide rail (73) along which the sheet-metal parts (10) can be moved with their leading edge disposed transversely to the weakening lines (11) during the movement through between the rollers (31, 32).

8. A welding machine as claimed in claim 7, characterised in that one portion of the lateral guide rail (73) extends in the vicinity of the welding electrodes (62, 63) and the positioning device (17) is adapted to generate a force in the direction of the weakening lines (11 = which force holds the sheet-metal part (10) lying between the welding electrodes (62, 63) in contact with the guide rail (73).

9. A welding machine as claimed in claim 1, characterised in that the tongue conveyor (18) is rotatable step-wise about a central axis (A) and comprises a plurality of receivers (52) disposed radially round this axis at equal circumferential distances apart, one for each tongue (12).

10. A welding machine as claimed in claim 9, characterised in that the receivers (52) are bounded radially outwards by a rim (75) of the tongue conveyor (18) and open radially inwards into an aperture (76) through which one of the welding electrodes (62, 63) can be moved in the direction of the other.

11. A welding machine as claimed in claim 9 or 10, characterised in that each receiver (52) is connected to a suction conduit (54) to draw in the punched-off tongue (12) by suction

12. A welding machine as claimed in claim 9, characterised in that the punch (60) comprises a suction cup (61) to hold the punched-off tongue (12) temporarily.

13. A welding machine as claimed in claim 1, the welding electrodes (62, 63) of which are movable in a pincer-like manner in relation to one another in a manner usual in spot welding, characterised in that disposed between the welding electrodes (62, 63) and the sheet-metal part (10) of the tongue (12) is an electrode wire (68) which can be moved on cyclically.

14. A welding machine as claimed in claim 1, characterised in that the positioning device (17) has associated with it two pairs of welding electrodes (62, 63) as well as two tongue conveyors (18) for welding one tongue (12) onto each of the two ends of a common tear-off strip or onto one end of each of two tear-off strips (11).

**Revendications**

1. Machine de soudage comportant au moins un couple d'électrodes de soudage (62, 63) pour le soudage de languettes (12) sur des morceaux de tôle (10) destinés a former des éléments de boîtes frangibles selon un procédé de soudage électrique par résistance, comportant
- un convoyeur (15) d'entraînement des tôles, qui déplace les morceaux de tôle (10) de façon cadencée entre les électrodes de soudage (62, 63) et comporte un transporteur à rouleaux, qui possède un organe de limitation latérale (33) et plusieurs groupes de rouleaux (32, 33) entre lesquels les morceaux de tôle (10) sont entraînés les uns derrière les autres, les rouleaux s'appliquant avec une précontrainte sur la face supérieure et sur la face inférieure des morceaux de tôle et au moins quelques rouleaux (32) étant disposés en faisant un angle aigu par rapport à la direction de déplacement du morceau de tôle et repoussant ce dernier contre l'organe de limitation latérale (33),
- un dispositif de positionnement (17) maintenant les morceaux de tôle (10) dans une position définie entre les électrodes de soudage (62, 63) et comportant une butée (48) qui est déplaçable d'une manière cadencée dans la voie de déplacement des morceaux de tôle (10), et
- un convoyeur (18) d'entraînement des languettes, qui applique les languettes (12), d'une manière réglée sur la cadence de travail du convoyeur (15) d'entraînement des tôles, contre un morceau de tôle particulier (10), entre les électrodes de soudage (62, 63) et comporte au moins un réceptacle (52), qui sert à recevoir une languette (12) et qui peut être déplacé depuis la zone d'un poinçon (60) servant à découper la languette à partir d'une bande de tôle (58) jusque dans la zone des électrodes de soudage (62, 63) et inversement.

2. Machine de soudage selon la revendication 1, caractérisée en ce qu'un cylindre de marquage (36) servant à imprimer au moins deux lignes d'affaiblissement parallèles, limitant une bande d'arrachement (11) , dans chaque morceau de tôle (10) est disposé entre deux groupes de rouleaux (31, 32) et que le dispositif de positionnement (17) est réglé de telle sorte que la bande d'arrachement (11) parvient entre les électrodes de soudage (62, 63).

3. Machine de soudage selon la revendication 1, caractérisée en ce que plusieurs groupes de rouleaux (32, 33), entre lesquels les éléments de tôle (10) sont disposés lors du soudage, peuvent tourner librement et que le dispositif de positionnement (17) comporte un organe d'entraînement (42), avec lequel des éléments de tôle (10) peuvent être déplacés entre les rouleaux (31, 32) de ces groupes pour être conduits dans une position de soudage.

4. Machine de soudage selon la revendication 3, caractérisée en ce que le convoyeur (15) des tôles possède un organe d'entraînement supplémentaire (43) déplaçable en va-et-vient et à l'aide duquel les morceaux de tôle (10) continuent à être déplacés à partir de la position de soudage.

5. Machine de soudage selon la revendication 1 pour des morceaux de tôle comportant des bandes d'arrachement limitées par des lignes d'affaiblissement, caractérisée en ce que le convoyeur (15) d'entraînement des tôles possède au moins une section de transport transversale (70) pouvant être déplacée de façon cadencée et s'étendant transversalement par rapport aux lignes d'affaiblissement.

6. Machine de soudage selon la revendication 5, caractérisée en ce que la section formant convoyeur transversal (70) comporte des organes d'entraînement (72), qui s'alignent de façon cadencée avec l'organe de limitation latérale (33) du transporteur à rouleaux.

7. Machine de soudage selon la revendication 6, caractérisée en ce qu'il est prévu latéralement, à côté de la section formant convoyeur transversal (70), un rail de guidage (73) le long duquel le bord des morceaux de tôle (10), qui est disposé transversalement par rapport aux lignes d'affaiblissement (11) et est situé en avant lors du déplacement entre les rouleaux (31, 32), peut se déplacer.

8. Machine de soudage selon la revendication 7, caractérisée en ce qu'une section du rail de guidage latéral (73) s'étend au voisinage des électrodes de soudage (62, 63) et que le dispositif de positionnement (17) est agencé de manière à produire, dans la direction des lignes d'affaiblissement (11), une force qui maintient le morceau de tôle (10), situé entre les électrodes de soudage (62, 63), appliqué contre le rail de guidage (73).

9. Machine de soudage selon la revendication 1, caractérisée en ce que le convoyeur (18) d'entraînement des languettes peut tourner de façon cadencée autour d'un axe central (A) et comporte plusieurs réceptacles (52) disposés radialement à des distances circonférentielles identiques autour de cet axe et servant à recevoir chacun une languette (12).

10. Machine de soudage selon la revendication 9, caractérisée en ce que les réceptacles (52) sont limités radialement vers l'extérieur par un bord (75) du convoyeur (18) d'entraînement des languettes et débouchent radialement vers l'intérieur dans un passage (76), dans lequel l'une des électrodes de soudage (62, 63) est déplaçable en direction de l'autre électrode.

11. Machine de soudage selon la revendication 9 ou 10, caractérisée en ce que chaque logement (52) est raccordé à un canal d'aspiration (54), servant à aspirer la languette découpée (12).

12. Machine de soudage selon la revendication 9, cacaractérisée en ce que le poinçon (60) possède une ventouse (61) servant à maintenir temporairement fixe la languette découpée (12).

13. Machine de soudage selon la revendication 1, dont les électrodes de soudage (62, 63) sont déplaçables à la façon de pinces l'une par rapport à l'autre d'une manière usuelle lors du soudage par points, caractérisée en ce qu'un fil-électrode (68) , qui peut être avancé de façon cadencée, est disposé entre les électrodes de soudage (62, 83) et le morceau de tôle (10) de la languette (12).

14. Machine de soudage selon la revendication 1, caractérisée en ce que deux couples d'électrodes de soudage (32, 33) ainsi que deux convoyeurs (18) d'entraînement des languettes sont associés au dispositif de positionnement (17) pour le soudage d'une languette particulière (12) sur les deux extrémités d'une bande d'arrachement commune (11) ou sur une extrémité déterminée de deux bandes d'arrachement (11).

Fig.1

Fig. 2

0 196 494

Fig. 1a

0 196 494

# Fig. 3

## Fig. 4

## Fig. 5

Fig. 6

Fig. 6a

## Fig. 8

## Fig. 7

# Fig. 9

Fig. 10